# EUROPÄISCHE PATENTANMELDUNG

(11) **EP 0 936 083 A2**
(43) Veröffentlichungstag der Anmeldung: **18.08.1999**
(21) Anmeldenummer: 98124262.1
(22) Anmeldetag: 18.12.1998
(51) Int. Cl.: B60B 3/00, B60B 3/06, B60B 3/10

(54) **Fahrzeugrad**

(30) Priorität: 10.02.1998 DE 19805270
(71) Anmelder: Dr.Ing. h.c.F. Porsche Aktiengesellschaft, 70435 Stuttgart (DE)
(72) Erfinder: Von Sivers, Rolf, 71287 Weissach-Flacht (DE); Ochs, Jürgen, 71297 Mönsheim (DE)

(57) **Zusammenfassung**

Ein Fahrzeugrad (1) ist mit einer Einrichtung zur Geräuschreduzierung, insbesondere mit einem Helmholtz-Resonator verbunden, wobei mindestens eine im und/oder am Rad angeordnete Luftkammer (2) bzw. mindestens ein Luftbehälter verwendet wird.

Weiterhin ist ein Fahrzeugrad mit einer Einrichtung zur Geräuschreduzierung, insbesondere mit einem Helmholtz-Resonator verbunden, wobei das Rad (1) aus einer Felge und einem Felgenstern (11) besteht, die einzeln herstellbar und miteinander beispielsweise durch eine Schweißung verbindbar sind und Ringräume und/oder Hohlspeichen aufweisen. In mindestens einem Hohlraum des Rades ist ein als Helmholtz-Resonator wirkender Luftbehälter einsetzbar.

## Beschreibung

Die Erfindung bezieht sich auf ein Fahrzeugrad mit einer Einrichtung zur Geräuschreduzierung, insbesondere mit einem Helmholtz-Resonator.

Aus der DE 195 40 259 C1 ist eine schallabsorbierende Radlaufabdeckung bekannt, die auf der dem Rad zugewandten Seite ein System von Helmholtz-Resonatoren aufweist. Die Abdeckung der Resonatoren weist Durchbrechungen auf, so daß die Dämpfung der in den Durchbrechungen schwingenden Luftmasse erhöht und somit das Absorbtionsspektrum der einzelnen Helmholtz-Resonatoren verbreitert wird.

Die Aufgabe der Erfindung besteht darin, ein geräuscharmes Fahrzeugrad unter Vermeidung von umgebenden Einrichtungen mit einfachen Mitteln zu schaffen.

Diese Aufgabe wird erfindungsgemäß durch die Merkmale des Anspruchs 1 gelöst. Weitere vorteilhafte Merkmale beinhalten die Unteransprüche.

Es hat sich gezeigt, daß insbesondere auf Tiefbettfelgen montierte schlauchlose Luftreifen für Kraftfahrzeuge stehende Schallwellen (Hohlraummoden) innerhalb des Reifentorus aufweisen, die sich speziell bei Fahrt auf rauher und unebener Fahrbahn als störende tonale Anteile im Innengeräusch des Fahrzeugs bemerkbar machen. Je nach Reifendimension und Reifenstruktur liegen diese Hohlraummoden bei ca. 100 bis 300 Hz. Nach dem diese Hohlraummoden praktisch ungedämpft sind, tritt eine relativ schmalbandige, spitze Resonanzüberhöhung auf.

Eine in der Akustik/Schwingungstechnik bewährte Methode zur Bedämpfung solcher Resonanzüberhöhungen ist die Applikation eines Antiresonators oder akustischen Tilgers. Eine Ausführungsform für die Bedämpfung von Luftschallschwingungen sind dabei sogenannte Impedanz- oder Lambda-Viertel-Rohre; besonders geeignet erscheinen aufgrund der guten Abstimmbarkeit auf niedrige Resonanzfrequenzen jedoch Abzweig-Volumen- oder Helmholtz-Resonatoren. Das Funktionsprinzip des Helmholtz-Resonators beruht darauf, daß die Schallwellen des zu bedämpfenden Raums die Luftsäule im Hals des Resonators zu gegenphasigen Schwingungen anregen und die Schallwellen schmalbandig bedämpft. Die Eigenfrequenz des Resonators hängt von seinem Halsdurchmesser und -länge (entspricht der Masse eines Einmassenschwingers) und vom Zusatzvolumen (entspricht der Feder eines Einmassenschwingers) ab. Das geräuscharme Fahrzeugrad wird insbesondere durch eine Anordnung einer oder mehreren von Luftkammern gebildet, die in das Rad integriert sind oder außen am Rad angeordnet werden.

Bei einem aus zwei Teilen bestehenden Fahrzeugrad mit Hohlspeichen und Ringräumen, wie nach der EP 0 547 313 B1, bietet es sich in vorteilhafter Weise an, in mindestens einem schon vorhandenen Raum, diesen entweder als Luftraum auszubilden oder aber einen Luftbehälter einzubringen. Dies ist bei dem bekannten Rad in einfacher Weise möglich, da es sich aus zwei zu verbindenden Teilen, nämlich der Felgenschüssel bzw. dem Felgenstern und der Felge zusammensetzt. Bei dieser Art von Rad kann der Luftbehälter vor dem Verbinden der beiden Felgenteile eingesetzt werden.

Die Luftkammern zur Bildung des Helmholtz-Resonators werden vorzugsweise von Hohlräumen im Rad, wie beispielsweise in der Speiche oder im Ringraum im Bereich der Felge oder im Bereich der Radnabe gebildet. Hierdurch wird der Vorteil erzielt, daß keine zusätzlichen Massen am sich bewegenden Rad entstehen. Die Hohlräume sind abgeschlossen und über eine Öffnung, wie beispielsweise einer Bohrung oder einem Schlitz oder dergleichen mit dem Reifeninnenraum verbunden, so daß ein Luftaustausch bzw. ein Gegeneinanderströmen der Luft erfolgen kann.

Bei weiteren vorteilhaften Ausführungen sind Luftbehälter außerhalb des Innenraums des Rades vorgesehen. So kann der Luftbehälter innenseitig des Felgensterns oder innenseitig der Felge vorgesehen sein. Die Öffnungen der Luftbehälter münden jeweils in den Reifeninnenraum ein.

Die Form der Luftbehälter kann aus einer beliebigen geometrischen Form bestehen. Die Anzahl der Luftbehälter bzw. die als Helmholtz-Resonatoren wirkenden Hohlräume können entsprechend den Gegebenheiten ausgelegt werden. Als Material für die Luftbehälter sind Kunststoffe und Metalle möglich.

Ausführungsbeispiele der Erfindung sind in den Zeichnungen dargestellt und werden im folgenden näher beschrieben.

Es zeigen
- Fig. 1: eine Schemadarstellung eines Helmholtz-Resonators,
- Fig. 2: ein Diagramm der Luftschallschwingungen mit und ohne Resonator,
- Fig. 3: einen Schnitt durch eine Hohlspeiche eines Rades mit einem Hohlraum als Helmholtz-Resonator,
- Fig. 4: einen Schnitt durch ein Fahrzeugrad mit einem Hohlraum im Ringraum, beispielsweise als eingelegtes Mehr-Kammer-Element,

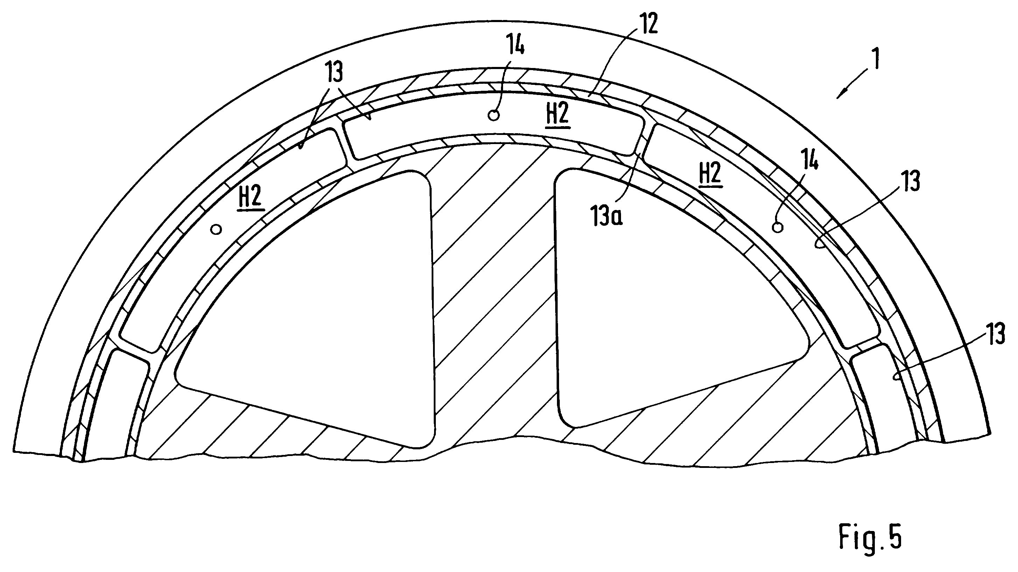

- Fig. 5: einen Schnitt nach der Linie V-V der Fig. 4,
- Fig. 6: einen Schnitt durch ein Fahrzeugrad mit einem Luftbehälter innenseitig des Felgensterns,
- Fig. 7: einen Schnitt durch ein Fahrzeugrad mit einem Luftbehälter innenseitig der Felge,
- Fig. 7a: einen Schnitt durch ein Fahrzeugrad mit einem im Reifeninnenraum angeordneten Luftbehälter und
- Fig. 8: eine Draufsicht auf das Rad nach Fig. 7 im Schnitt mit Luftbehältern.

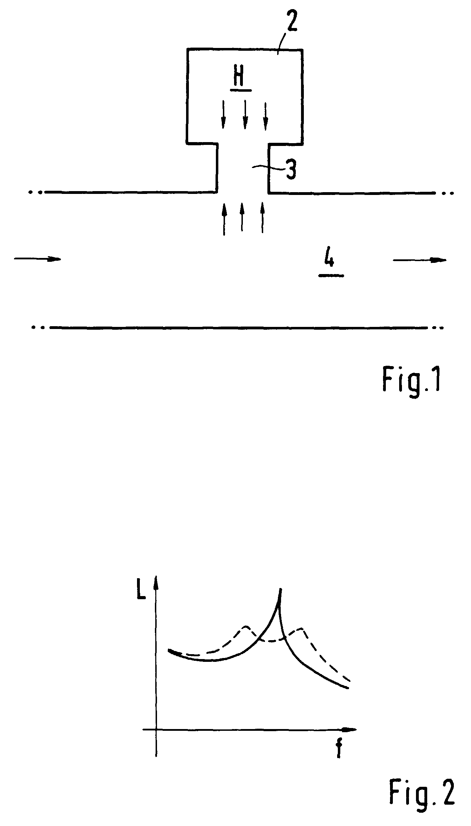

Eine schematische Darstellung des Helmholtz-Resonators ist in Fig. 1 dargestellt, der zur Geräuschreduzierung in einem Fahrzeugrad 1 verwendet wird und aus einer Luftkammer 2 mit einem Hohlraum H besteht, der mit einer Öffnung 3 in einen Reifeninnenraum 4 einmündet. In Fig. 2 ist der Schwingungsverlauf in ausgezogenen Linien ohne Verwendung eines Helmholtz-Resonators und in gestrichelten Linien mit einem Helmholtz-Resonator dargestellt, wobei auf der X-Achse der Frequenzverlauf und auf der Y-Achse der Schalldruck L aufgetragen sind, woraus eine Geräuschabsenkung eindeutig zu erkennen ist.

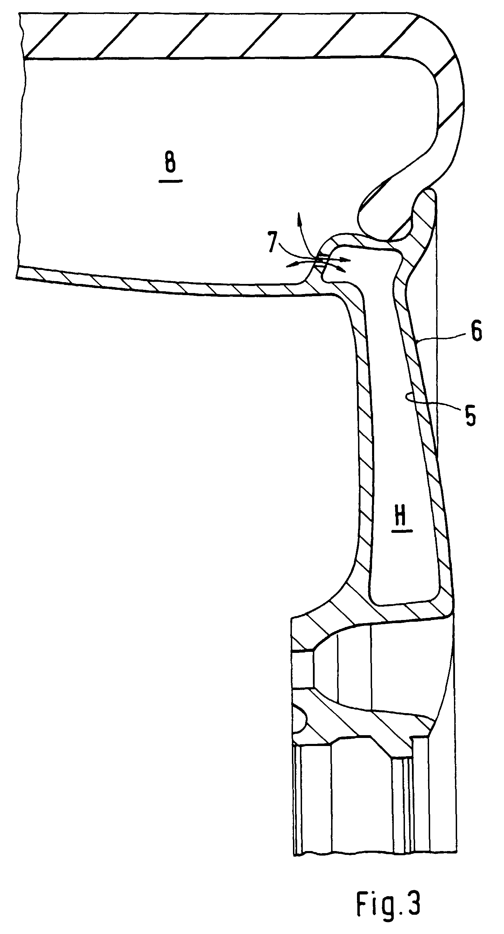

Das Fahrzeugrad 1 kann als sogenanntes Hohlspeichenrad oder als Vollgußrad ausgebildet sein. Bei einem Hohlspeichenrad ist die den Helmholtz-Resonator bildende Luftkammer 5 mit Hohlraum H in mindestens einer Speiche 6 des Rades 1 angeordnet, wie Fig. 3 näher zeigt. Über eine Öffnung 7 ist der Hohlraum H mit dem Reifeninnenraum 8 verbunden.

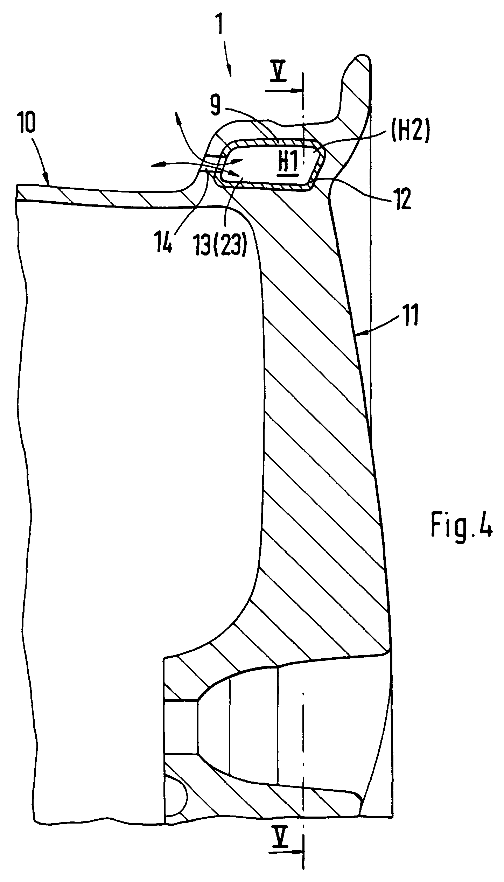

Desweiteren kann eine Luftkammer 13 mit Hohlraum H2 auch in einem Ringraum 9 des Rades 1 angeordnet sein, der teilweise nur von der Felge 10 und teilweise nur vom Felgenstern 11 gebildet wird, wie Fig. 4 näher zeigt.

Die Luftkammer 13 mit Hohlraum H1 kann im Ringraum 9 vorzugsweise aus einem eingelegten Ring 12 bestehen, der mehrere, durch Wände 13a unterteilte Luftkammern 13 aufweist, die über eine oder mehrere Öffnungen 14 zum Reifeninnenraum 8 hin geöffnet sind.

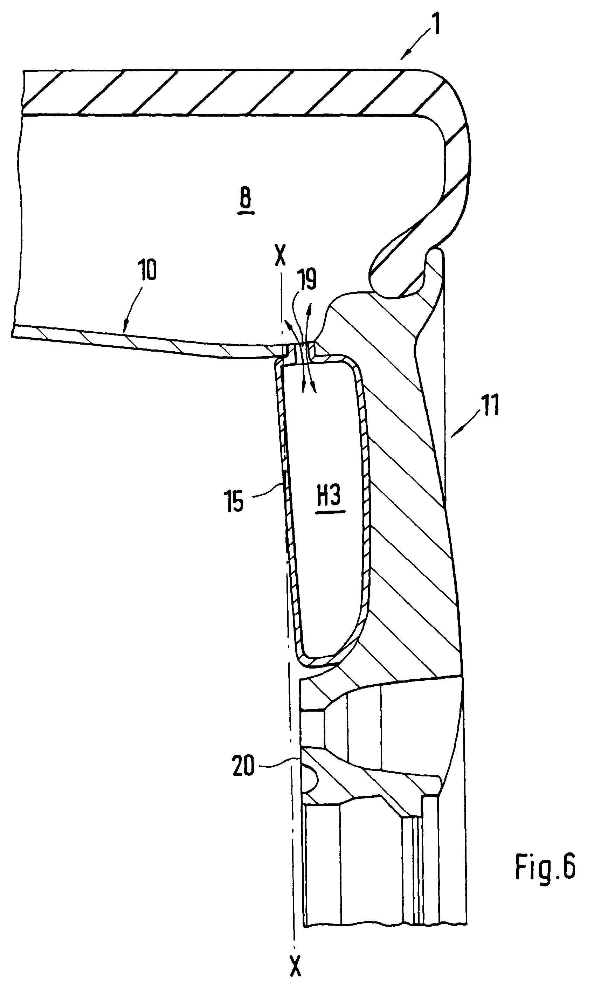

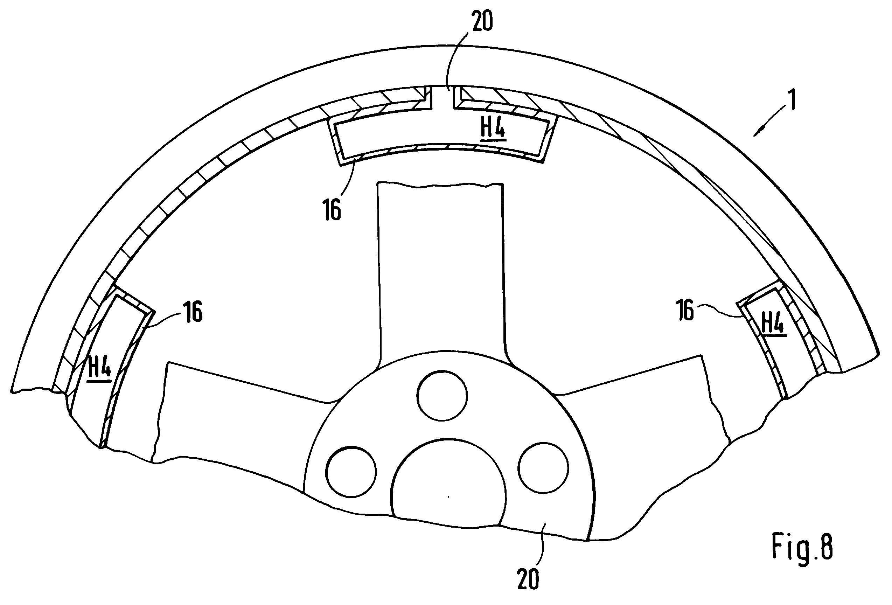

Weitere Ausführungen der Erfindung sind in den Fig. 6 bis 8 dargestellt. Bei diesen Ausführungen sind mit dem Rad separate Luftbehälter 15, 16 mit Hohlräumen H3 und H4 verbunden. Nach einer ersten Ausführung ist der Luftbehälter 15 innenseitig der Felge 10 und nach einer zweiten Ausführung innenseitig des Felgensterns 11 befestigt. Über Öffnungen 19, 20 erfolgt eine Verbindung zum Reifeninnenraum 8.

Die Luftbehälter 15, 16 sind unmittelbar an der Wandung der Felgenschüssel 11 und der Felge 10 angeschmiegt angeordnet. Bei der Ausführung nach Fig. 6 ist der Luftbehälter 15 im Raum zwischen der Felgenschüssel 11 und der Radnabe 20 so ausgebildet, daß dieser etwa mit der Ebene X-X abschließt und kein Überstand vorhanden ist.

Die Luftbehälter 15, 16 und die Hohlräume welche den Helmholtz-Resonator bilden, können eine Anzahl entsprechend den Erfordernissen aufweisen.

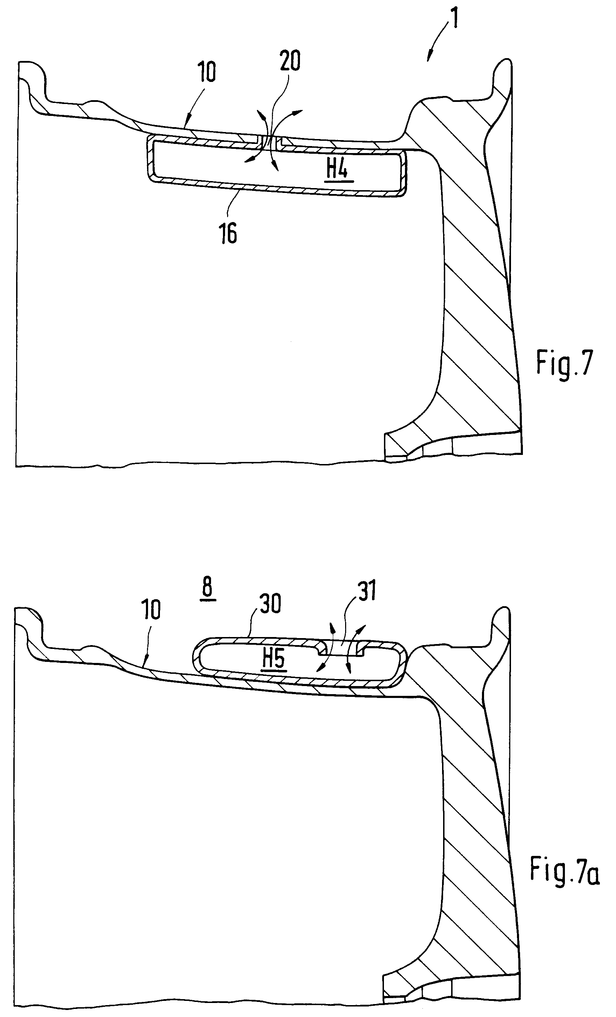

Nach einer weiteren Ausführung gemäß Fig. 7a kann ein Luftbehälter 30 mit einem Hohlraum H5 auch im Reifeninnenraum 8 angeordnet sein. In diesem Fall erfolgt eine Verbindung mit der Felge 10. Vorzugsweise schmiegt sich der Behälter 30 in die Form der Felge 10 ein. Der Behälter 30 kann abschnittsweise oder als Ring bzw. als Ring mit einzelnen Kammern rundherum der Felge 10 angeordnet werden.

## Patentansprüche

1. Fahrzeugrad mit einer Einrichtung zur Geräuschreduzierung, insbesondere mit einem Helmholtz-Resonator, dadurch gekennzeichnet, daß das Rad (1) mindestens eine im und/oder am Rad (1) angeordnete Luftkammer (5; 13; 23) bzw. einen Luftbehälter (15; 16; 30) mit einem Hohlraum (H; H1; H2; H3; H4; H5) als Helmholtz-Resonator aufweist.

2. Fahrzeugrad nach Anspruch 1, dadurch gekennzeichnet, daß in mindestens einer Hohlspeiche (6) des Rades (1) die Luftkammer (5) mit einem Hohlraum (H) ausgebildet ist, der mindestens eine Öffnung (7) zum Reifeninnenraum (8) aufweist.

3. Fahrzeugrad nach Anspruch 1, dadurch gekennzeichnet, daß in einem Ringraum (9) der Felge (10) mindestens eine Luftkammer (13; 23) mit einem Hohlraum (H1; H2) gebildet wird, die mindestens eine Öffnung (14) zum Reifeninnenraum (8) aufweist.

4. Fahrzeugrad nach den Ansprüchen 1 oder 3, dadurch gekennzeichnet, daß der gesamte Ringraum (9) in mehrere geschlossene Luftkammern (13; 23) unterteilt ist, die jeweils eine Öffnung (14) zum Reifeninnenraum (8) aufweisen.

5. Fahrzeugrad nach den Ansprüchen 1 oder 4, dadurch gekennzeichnet, daß die Luftkammern (23) im Ringraum (9) durch Wandungen des Rades (1) gebildet sind und in der Wandung mindestens eine Luftöffnung vorgesehen ist.

6. Fahrzeugrad nach den Ansprüchen 1, 2 oder 4, dadurch gekennzeichnet, daß die Luftkammern (13) durch ein Einlegeelement (12) gebildet sind und Unterteilungen (13a) aufweisen und jede Kammer (13) mindestens eine Luftöffnung (14) besitzt.

7. Fahrzeugrad nach Anspruch 1, dadurch gekennzeichnet, daß an der Innenfläche der Felgenschüssel (11) mindestens ein als Helmholtz-Resonator ausgebildeter separater Luftbehälter (15) mit einem Hohlraum (H3) angeordnet ist, der eine Öffnung (19) zum Reifeninnenraum (8) im Bereich der Felge (10) aufweist.

8. Fahrzeugrad nach Anspruch 7, dadurch gekennzeichnet, daß der Behälter (15) mit seiner einen Wandung innenseitig der Felgenschüssel (11) anliegt und die gegenüberliegende Wandung in Höhe der Radnabe (20) mit der Ebene (X-X) abschließt.

9. Fahrzeugrad nach Anspruch 1, dadurch gekennzeichnet, daß innenseitig der Felge (10) mindestens ein als Helmholtz-Resonator ausgebildeter separater Luftbehälter (16) mit einem Hohlraum (H4) angeordnet ist, der eine Öffnung (20) in der Felge (10) aufweist, welche in den Reifeninnenraum (8) einmündet.

10. Fahrzeugrad nach Anspruch 1, dadurch gekennzeichnet, daß mindestens ein separater Luftbehälter (30) mit einem Hohlraum (H5) innerhalb des Reifeninnenraumes (8) auf der Felge (10) gehalten ist und eine Luftöffnung (31) aufweist.

11. Fahrzeugrad mit einer Einrichtung zur Geräuschreduzierung, insbesondere mit einem Helmholtz-Resonator, wobei das Rad aus einer Felge und einem Felgenstern besteht, die einzeln herstellbar und miteinander verbindbar sind und Ringräume und/oder Hohlspeichen aufweisen, dadurch gekennzeichnet, daß in mindestens einem Hohlraum des Rades (1) ein als Helmholtz-Resonator wirkender Luftbehälter einsetzbar ist, der mindestens eine Öffnung zum Reifeninnenraum aufweist.
